# EUROPEAN PATENT APPLICATION

(11) **EP 3 219 823 A1**
(43) Date of publication of application: **20.09.2017**
(21) Application number: 17150537.3
(22) Date of filing: 06.01.2017
(51) Int. Cl.: C22C 38/34, C22C 38/00, C22C 38/44, C22C 38/48, C22C 38/46, C22C 38/50, C22C 38/56, C22C 38/04, C22C 38/52

(54) **LOW COBALT HARD FACING ALLOY**

(30) Priority: 01.02.2016 GB 201601764
(71) Applicant: Rolls-Royce plc, London SW1E 6AT (GB)
(72) Inventor: Stewart, David, Derby, Derbyshire DE24 8BJ (GB)
(74) Representative: Rolls-Royce plc

(57) **Abstract**

A stainless steel alloy comprising essentially of 19 to 22 percent by weight chromium, 8.5 to 10.5 percent by weight nickel, 5.25 to 5.75 percent by weight silicon, 0.25 to 2.0 percent by weight carbon, 4.0 to 10.5 percent by weight molybdenum, 0.3 to 0.5 percent by weight titanium, 0.1 to 0.5 by weight percent nitrogen and the balance iron plus impurities. The impurities may consist of 0 to 0.2 percent by weight cobalt, 0 to 0.5 percent by weight manganese, 0 to 0.3 percent by weight molybdenum, 0 to 0.03 percent by weight phosphor, 0 to 0.03 percent by weight sulphur, 0 to 0.1 percent by weight nitrogen.

## Description

### Field of the Invention

The present invention relates to steel alloys and particularly a chromium nickel silicon stainless steel alloy with low cobalt that may be suited for use in nuclear reactors, particularly in the components used in the steam generating plant of nuclear reactors.

### Background of the Invention

Traditionally, cobalt-based alloys, including Stellite (RTM) alloys, have been used for wear-based applications including, for example, in nuclear power applications. The alloys may be used to both form components or to provide hard-facing where harder or tougher material is applied to a base metal or substrate.

It is common for hard-facing to be applied to a new part during production to increase its wear resistance. Alternatively, hard-facing may be used to restore a worn surface. Extensive work in research has resulted in the development of a wide range of alloys and manufacturing procedures dependent on the properties and/ or characteristics of the required alloy.

Within the nuclear industry the presence of cobalt within an alloy gives rise to the potential for the cobalt to activate within a neutron flux to result in the radioisotope cobalt-60 which has a long half-life. This makes the use of cobalt undesirable for alloys used in this industry. The cobalt may be released as the alloy wears through various processes, one of which is galling that is caused by adhesion between sliding surfaces caused by a combination of friction and adhesion between the surfaces, followed by slipping and tearing of crystal structure beneath the surface. This will generally leave some material stuck or even friction welded to the adjacent surface, whereas the galled material may appear gouged with balled-up or torn lumps of material stuck to its surface.

Replacements for Stellite have been developed by the industry with low or nil cobalt quantities. Exemplary alloys are detailed in the table below:

| Alloy | Cr | C | Nb | Nb+Va | Ni | Si | Fe | Co | Ti |
|---|---|---|---|---|---|---|---|---|---|
| GB2167088 | 15-25 | 1-3 | | 5-15 | 5-15 | 2.7-5.6 | Bal | Nil | Nil |
| T5183 | 19-22 | 1.8-2.2 | 6.5-8.0 | | 8.5-10.5 | 4.5-5.25 | Bal | 0.2 | Trace |
| US5660939 | 19-22 | 1.7-2.0 | 8.0-9.0 | | 8.5-10.5 | 5.25-5.75 | Bal | 0.2 | 0.3-0.7 |

In GB2167088 niobium is provided, but always with the presence of vanadium, which prevents the chromium from combining with the carbon and weakening the matrix. The vanadium also acts as a grain refiner within the wholly austenitic alloy that helps the keep the size of the grains within the alloy within an acceptable range.

The alloys of US5660939 modified the alloy of T5183 by the deliberate addition of titanium and by increasing the amounts of niobium and silicon. The controlled additions of titanium, niobium and silicon alter the structure of the steel to provide a duplex austenitic / ferritic microstructure which undergoes secondary hardening due to the formation of an iron silicon intermetallic phase.

Further hardening is achievable by hot isostatic pressing (HIPPING) of the stainless steel alloy when in powder form where secondary hardening occurs within the ferritic phase of the duplex microstructure.

The niobium provides a preferential carbide former over chromium, enabling high chromium levels to be maintained within the matrix so as to give good corrosion performance. Low cobalt based alloys, or cobalt alloy replacements, typically comprise significant quantities of carbide forming elements which can form alloys with hardness values in excess of 500Hv. As with traditional Stellite alloys, the high levels of hardness observed can make machining difficult, resulting in poor mechanical properties for, for example, ductility, fracture toughness, impact resistance and workability. Additionally, the cost of using such alloys is high due to the need for special treatments and/ or precision casting or other near net shape manufacturing methods to limit further machining.

Accordingly, it would therefore be advantageous to provide an alloy without the aforementioned disadvantages.

### Summary of the Invention

The present invention accordingly provides, in a first aspect, an alloy consisting essentially of 19 to 22 percent by weight chromium, 8.5 to 10.5 percent by weight nickel, 5.25 to 5.75 percent by weight silicon, 0.25 to 2.0 percent by weight carbon, 4.0 to 10.5 percent by weight of a carbide former selected from the group consisting of molybdenum, tantalum, tungsten, zirconium and vanadium,, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 to 2/0 percent by weight carbon, 4.0 to 10.5 percent by weight molybdenum, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight molybdenum, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.8 to 1.2 percent by weight carbon, 4.0 to 6.0 percent by weight molybdenum, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 1.7 to 2.0 percent by weight carbon, 8.5 to 10.5 percent by weight molybdenum, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight titanium, 0.1 to 0.5 by weight percent nitrogen and the balance iron plus impurities.

The alloy may consist essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight tantalum, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight tantalum, 0.3 to 0.5 percent by weight titanium, 0.1 to 0.5 by weight percent nitrogen and the balance iron plus impurities.

The alloy may consist essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight tantalum, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight tantalum, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight tungsten, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight tungsten, 0.3 to 0.5 percent by weight titanium, 0.1 to 0.5 by weight percent nitrogen and the balance iron plus impurities.

The alloy may consist essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight tungsten, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight tungsten, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight Zirconium, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight Zirconium, 0.3 to 0.5 percent by weight titanium, 0.1 to 0.5 by weight percent nitrogen and the balance iron plus impurities.

The alloy may consist essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight Zirconium, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight Zirconium, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight vanadium, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight vanadium, 0.3 to 0.5 percent by weight titanium, 0.1 to 0.5 by weight percent nitrogen and the balance iron plus impurities.

The alloy may consist essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight vanadium, 0.3 to 0.5 percent by weight titanium, 0.1 to 0.5 by weight percent nitrogen and the balance iron plus impurities.

The alloy may consist essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight vanadium, 0.3 to 0.5 percent by weight titanium, 0.1 to 0.5 by weight percent nitrogen and the balance iron plus impurities.

The impurities in these alloys may consist of 0 to 0.2 percent by weight cobalt, 0 to 0.5 percent by weight manganese, 0 to 0.3 percent by weight molybdenum, 0 to 0.03 percent by weight phosphor, 0 to 0.03 percent by weight sulphur.

The alloy may be in powder form which is consolidated in a hot isostatic press.

The alloy may be applied to an article to provide a coating on the article. The coating may be hard faced or formed on the article by welding.

The alloy may be used in a steam generating plant. The steam may be generated through a nuclear reaction.

Preferred embodiments of the present invention will now be described, by way of example only.

### Detailed Description of the Preferred Embodiments

The improved alloys described here have been developed having, in weight percent, 19 to 22 percent by weight chromium, 8.5 to 10.5 percent by weight nickel, 5.25 to 5.75 percent by weight silicon, 0.25 to 2.0 percent by weight carbon, 4.0 to 10.5 percent by weight of a carbide former selected from the group consisting of molybdenum, tantalum, tungsten, zirconium and vanadium, 0.3 to 0.5 percent by weight titanium, 0.1 to 0.5 by weight percent nitrogen and the balance iron plus impurities.

The impurities may be up to 0.2 wt% cobalt, up to 0.5 wt% manganese, up to 0.03wt% phosphor, up to 0.03wt% sulphur and up to 0.1 wt% nitrogen. In the alloys which use titanium, tantalum, tungsten, zirconium or vanadium as the carbide former the alloy may contain an impurity of up to 0.3 wt% molybdenum

These compositions are similar to those proposed in US5660939 but there is a reduction in the niobium content and substitution with one or more carbide formers selected from the group consisting molybdenum, titanium, tantalum, tungsten, zirconium and vanadium.

Molybdenum is a carbide former which may be provided within the alloy in a quantity which further improves the properties of the alloy as it is provided in such a quantity that residual molybdenum following the formation of the carbides remains within the matrix and provides an improved pitting resistance.

In addition molybdenum carbide and tungsten carbide form at lower temperatures than niobium carbide and have a tendency to form molybdenum, or tungsten containing chromium carbides where the chromium content is in the range 19 to 22 by weight. Where niobium has been used as the carbide former it has been found that because it is a strong carbide former niobium carbides can form whilst atomising (or early on in casting if by that route) and grow which can then lead to nozzle blockages etc and hence low powder yield. Because molybdenum and tungsten have less affinity to form carbides than chromium the reaction with carbon provides molybdenum-containing chromium (Cr, Mo)C carbides rather than molybdenum carbides or tungsten-containing chromium (Cr, W)C carbides. In this way manufacturability of the alloy is maintained.

Exemplary alloy 1 consists essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight titanium, 0.1 to 0.5 by weight percent nitrogen and the balance iron plus impurities.

Exemplary alloy 2 consists essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight titanium, 0.1 to 0.5 by weight percent nitrogen and the balance iron plus impurities.

Exemplary alloy 3 consists essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight titanium, 0.1 to 0.5 by weight percent nitrogen and the balance iron plus impurities.

Exemplary alloy 4 consists essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight titanium, 0.1 to 0.5 by weight percent nitrogen and the balance iron plus impurities.

Exemplary alloy 5 consists essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight tantalum, 0.3 to 0.5 percent by weight titanium, 0.1 to 0.5 by weight percent nitrogen and the balance iron plus impurities.

Exemplary alloy 6 consists essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight tantalum, 0.3 to 0.5 percent by weight titanium, 0.1 to 0.5 by weight percent nitrogen and the balance iron plus impurities.

Exemplary alloy 7 consists essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight tantalum, 0.3 to 0.5 percent by weight titanium, 0.1 to 0.5 by weight percent nitrogen and the balance iron plus impurities.

Exemplary alloy 8 consists essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight tantalum, 0.3 to 0.5 percent by weight titanium, 0.1 to 0.5 by weight percent nitrogen and the balance iron plus impurities.

Exemplary alloy 9 consists essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight tungsten, 0.3 to 0.5 percent by weight titanium, 0.1 to 0.5 by weight percent nitrogen and the balance iron plus impurities.

Exemplary alloy 10 consists essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight tungsten, 0.3 to 0.5 percent by weight titanium, 0.1 to 0.5 by weight percent nitrogen and the balance iron plus impurities.

Exemplary alloy 11 consists essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight tungsten, 0.3 to 0.5 percent by weight titanium, 0.1 to 0.5 by weight percent nitrogen and the balance iron plus impurities.

Exemplary alloy 12 consists essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight tungsten, 0.3 to 0.5 percent by weight titanium, 0.1 to 0.5 by weight percent nitrogen and the balance iron plus impurities.

Exemplary alloy 13 consists essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight Zirconium, 0.3 to 0.5 percent by weight titanium, 0.1 to 0.5 by weight percent nitrogen and the balance iron plus impurities.

Exemplary alloy 14 consists essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight Zirconium, 0.3 to 0.5 percent by weight titanium, 0.1 to 0.5 by weight percent nitrogen and the balance iron plus impurities.

Exemplary alloy 15 consists essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight Zirconium, 0.3 to 0.5 percent by weight titanium, 0.1 to 0.5 by weight percent nitrogen and the balance iron plus impurities.

Exemplary alloy 16 consists essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight Zirconium, 0.3 to 0.5 percent by weight titanium, 0.1 to 0.5 by weight percent nitrogen and the balance iron plus impurities.

Exemplary alloy 17 consists essentially of 19 to 22 percent by weight chromium, 8.5 to 10.5 percent by weight nickel, 5.25 to 5.75 percent by weight silicon, 0.25 to 2.0 percent by weight carbon, 4.0 to 9.0 percent by weight vanadium, 0.3 to 0.5 percent by weight titanium, 0.1 to 0.5 by weight percent nitrogen and the balance iron plus impurities.

Exemplary alloy 18 consists essentially of 19 to 22 percent by weight chromium, 8.5 to 10.5 percent by weight nickel, 5.25 to 6.0 percent by weight silicon, 1.7 to 2.0 percent by weight carbon, 8.0 to 9.0 percent by weight vanadium, 0.3 to 0.5 percent by weight titanium, 0.1 to 0.5 by weight percent nitrogen and the balance iron plus impurities.

Exemplary alloy 19 consists essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight vanadium, 0.3 to 0.5 percent by weight titanium, 0.1 to 0.5 by weight percent nitrogen and the balance iron plus impurities.

Exemplary alloy 20 consists essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight vanadium, 0.3 to 0.5 percent by weight titanium, 0.1 to 0.5 by weight percent nitrogen and the balance iron plus impurities.

Exemplary alloy 21 consists essentially of 19 to 22 percent by weight chromium, 8.5 to 10.5 percent by weight nickel, 5.25 to 5.75 percent by weight silicon, 0.25 percent by weight carbon, 4.0 to 6.0 percent by weight molybdenum, 0.3 to 0.5 percent by weight titanium, 0.1 to 0.5 by weight percent nitrogen and the balance iron plus impurities.

Exemplary alloy 22 consists essentially of 19 to 22 percent by weight chromium, 8.5 to 10.5 percent by weight nickel, 5.25 to 5.75 percent by weight silicon, 0.8 to 1.2 percent by weight carbon, 4.0 to 6.0 percent by weight molybdenum, 0.3 to 0.5 percent by weight titanium, 0.1 to 0.5 by weight percent nitrogen and the balance iron plus impurities.

Exemplary alloy 23 consists essentially of 19 to 22 percent by weight chromium, 8.5 to 10.5 percent by weight nickel, 5.25 to 5.75 percent by weight silicon, 1.7 to 2.0 percent by weight carbon, 8.5 to 10.5 percent by weight molybdenum, 0.3 to 0.5 percent by weight titanium, 0.1 to 0.5 by weight percent nitrogen and the balance iron plus impurities.

In each of the above exemplary alloys impurities, which may be deliberately added, may be present. The impurities may be up to 0.2 wt% cobalt, up to 0.5 wt% manganese, up to 0.03wt% phosphor, up to 0.03wt% sulphur and up to 0.1 wt% nitrogen, up to 200ppm wt% oxygen. In the alloys which use titanium, tantalum, tungsten, zirconium or vanadium as the carbide former the alloy may contain an impurity of 0 to 0.3 wt% molybdenum

The new alloys have an acceptable galling resistance as carbides will still be formed, and the matrix continues to have a duplex autenitic / ferritic microstructure which undergoes secondary hardening due to the formation of an iron silicon intermetallic phase.

Further hardening is achievable by hot isostatic pressing (HIPPING) of the stainless steel alloy when in powder form where secondary hardening occurs within the ferritic phase of the duplex microstructure.

Although carbides continue to be formed the alloy has a resultant lover overall carbide caused, in part, by the weight percentage content of molybdenum and carbon giving an alloy with an acceptable hardness but greater ductility and toughness. This improvement in ductility opens up the range of range of applications where consideration to shock events has to be considered as well as the overall wear resistance requirement.

## Claims

1. An alloy consisting essentially of 19 to 22 percent by weight chromium, 8.5 to 10.5 percent by weight nickel, 5.25 to 6.0 percent by weight silicon, 0.25 to 2.0 percent by weight carbon, 4.0 to 10.5 percent by weight of a carbide former selected from the group consisting of molybdenum, tantalum, tungsten, zirconium and vanadium, 0.3 to 0.5 percent by weight titanium, 0.1 to 0.5 by weight percent nitrogen and the balance iron plus impurities

2. An alloy comprising essentially of 19 to 22 percent by weight chromium, 8.5 to 10.5 percent by weight nickel, 5.25 to 5.75 percent by weight silicon, 0.25 to 2.0 percent by weight carbon, 4.0 to 10.5 percent by weight molybdenum, 0.3 to 0.5 percent by weight titanium, 0.1 to 0.5 by weight percent nitrogen and the balance iron plus impurities.

3. An alloy according to claim 2, consisting essentially of 19 to 22 percent by weight chromium, 8.5 to 10.5 percent by weight nickel, 5.25 to 5.75 percent by weight silicon, 0.8 to 1.2 percent by weight carbon, 4.0 to 6.0 percent by weight molybdenum, 0.3 to 0.5 percent by weight titanium, 0.1 to 0.5 by weight percent nitrogen and the balance iron plus impurities.

4. An alloy according to claim 2, consisting essentially of 19 to 22 percent by weight chromium, 8.5 to 10.5 percent by weight nickel, 5.25 to 5.75 percent by weight silicon, 1.7 to 2.0 percent by weight carbon, 8.5 to 10.5 percent by weight molybdenum, 0.3 to 0.5 percent by weight titanium, 0.1 to 0.5 by weight percent nitrogen and the balance iron plus impurities.

5. An alloy according to any preceding claim, wherein the impurities consist of 0 to 0.2 percent by weight cobalt, 0 to 0.3 percent by weight molybdenum, 0 to 0.03 percent by weight phosphor, 0 to 0.03 percent by weight sulphur, 0.1 to 0.5 percent by weight nitrogen and the balance iron plus impurities.

6. An alloy according to claim 1, consisting essentially of 19 to 22 percent by weight chromium, 8.5 to 10.5 percent by weight nickel, 5.25 to 6.0 percent by weight silicon, 0.25 to 2.0 percent by weight carbon, 4.0 to 9.0 percent by weight tantalum, 0.3 to 0.5 percent by weight titanium, 0.1 to 0.5 by weight percent nitrogen and the balance iron plus impurities.

7. An alloy according to claim 6, consisting essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight tantalum, 0.3 to 0.5 percent by weight titanium, 0.1 to 0.5 by weight percent nitrogen and the balance iron plus impurities.

8. An alloy according to claim 1, consisting essentially of 19 to 22 percent by weight chromium, 8.5 to 10.5 percent by weight nickel, 5.25 to 6.0 percent by weight silicon, 0.25 to 2.0 percent by weight carbon, 4.0 to 9.0 percent by weight tungsten, 0.3 to 0.5 percent by weight titanium, 0.1 to 0.5 by weight percent nitrogen and the balance iron plus impurities.

9. An alloy according to claim 8, consisting essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight tungsten, 0.3 to 0.5 percent by weight titanium, 0.1 to 0.5 by weight percent nitrogen and the balance iron plus impurities.

10. An alloy according to claim 1, consisting essentially of 19 to 22 percent by weight chromium, 8.5 to 10.5 percent by weight nickel, 5.25 to 6.0 percent by weight silicon, 0.25 to 2.0 percent by weight carbon, 4.0 to 9.0 percent by weight Zirconium, 0.3 to 0.5 percent by weight titanium, 0.1 to 0.5 by weight percent nitrogen and the balance iron plus impurities.

11. An alloy according to claim 10, consisting essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight Zirconium, 0.3 to 0.5 percent by weight titanium, 0.1 to 0.5 by weight percent nitrogen and the balance iron plus impurities.

12. An alloy according to claim 1, consisting essentially of 19 to 22 percent by weight chromium, 8.5 to 10.5 percent by weight nickel, 5.25 to 6.0 percent by weight silicon, 0.25 to 2.0 percent by weight carbon, 4.0 to 9.0 percent by weight vanadium, 0.3 to 0.5 percent by weight titanium, 0.1 to 0.5 by weight percent nitrogen and the balance iron plus impurities.

13. An alloy according to claim 12, consisting essentially of 19 to 22 percent by weight chromium, 8.5 to 9.5 percent by weight nickel, 5.25 to 5.75 percent by weight silicon, 0.8 to 1.2 percent by weight carbon, 4.0 to 6.0 percent by weight vanadium, 0.3 to 0.5 percent by weight titanium, 0.1 to 0.5 by weight percent nitrogen and the balance iron plus impurities.

14. An alloy according to any of claims 6 to claim 13, wherein the impurities consist of 0 to 0.2 percent by weight cobalt, 0 to 0.5 percent by weight manganese, 0 to 0.3 percent by weight molybdenum, 0 to 0.03 percent by weight phosphor, 0 to 0.03 percent by weight sulphur, 0 to 0.1 percent by weight nitrogen.

15. An article comprising an alloy as claimed in any preceding claim.
